# EUROPEAN PATENT APPLICATION

(11) **EP 2 685 081 A1**
(43) Date of publication of application: **15.01.2014**
(21) Application number: 12290229.9
(22) Date of filing: 09.07.2012
(51) Int. Cl.: F02M 35/02, B01D 46/24, B01D 46/00

(54) **Air cleaner in particular of an internal combustion engine**

(71) Applicant: MANN+HUMMEL GmbH, 71638 Ludwigsburg (DE)
(72) Inventor: Desnoe, Willy, 49430 Lezigne (FR); Nabucet, Gurvan, 72000 Le Mans (FR)

(57) **Abstract**

The present invention relates to an air cleaner (10) in particular of an internal combustion engine in particular of a motor vehicle, comprising a housing (12) with a slide-in opening (32) for inserting a slide-in filter element (30) and a cover element (58) for closing the slide-in opening (30). The cover element (58) comprises at least one one-piece snap element (66) for fixing the cover element (58) at the housing (12). An angle (64) between a main plane (50) of a sealing face (46) of the housing (12) for a sealing (48) between the filter element (30) and the housing (12) and a main plane (54) of a contact face (62) of the cover element (58), to which a corresponding contact face (52) of the housing (12) abuts in a closing state of the cover element (58), is different from 90°.

## Description

### Technical Field

The present invention relates to an air cleaner in particular of an internal combustion engine in particular of a motor vehicle, comprising a housing with a slide-in opening for inserting a slide-in filter element, a cover element for closing the slide-in opening, which comprises at least one one-piece snap element for fixing the cover element at the housing.

### State of Technology

The DE 10 2007 063 252 A1 discloses a slide-in air filter of an air conditioner of a vehicle. The air conditioner comprises an air blower for sucking fresh ambient air or recirculating air from the vehicle interior. The air conditioner further comprises an air duct on the inlet side for the air in front of the air blower, which has a holding fixture for the slide-in air filter. The slide-in air filter comprises a slot and an air filter. The slot with the air filter is bendable around a bending axis. The bending axis is aligned parallel to a plane of insertion and at right angles to a direction of insertion.

It is an object of the invention to provide an air cleaner of the above-mentioned kind, which is capable of establishing an effective seal to impede a leakage of air in the air cleaner. Further, it should be easy to open and close the cover element.

### Disclosure of Invention

The object is achieved by that an angle between a main plane of a sealing face of the housing for a sealing between the filter element and the housing and a main plane of a contact face of the cover element, to which a corresponding contact face of the housing abuts in a closing state of the cover element, is different from 90°.

Favourably, the main planes of the sealing face and the contact face are not perpendicular. So, a component of a force realized by the at least one snap element for pressing the cover element against the housing also can realize a pressure of the filter element against the sealing face. In this way, the tightness of the sealing between the filter element in the housing and the tightness of the connection of the cover element and the housing both are improved. The main planes define the average orientation of the according faces each. This means, that the faces themselves can have areas, which extend in an angle to the according main plane. In particular, the faces can have a profiling along the main plane. The at least one snap element is realized in one piece with the cover element and so is loss-proof connected to the cover element. This simplifies an opening and closing process of the cover element. Further, separate snap elements, in particular screws or tension springs, are not necessary. Favorably, the at least one snap element easy can be realized in one production step together with the cover element. Advantageously, the cover element with the at least one snap element are made of plastic. With plastic, elastic snap elements easy can be realized. The cover element with the at least one snap element also can be made of a material different from plastic.

According to a favourable embodiment of the invention, a tension force of the at least one snap element can realize a first force component, which is perpendicular to the main plane of the contact face of the cover element, and a second force component, which is perpendicular to the main plane of the sealing face of the housing. Advantageously, the tension force of the at least one snap element can be perpendicular to the main plane of the sealing face, so that the second force component is identical with the tension force itself. The first force component can effect the pressure of the cover element against the housing, so that the tightness of the connection between the cover element and the housing can be improved. The second force component can cause the pressure of the filter element against the sealing face of the housing, so that the compression of the sealing between the filter element and the housing and so the tightness can be improved.

Advantageously, an angle between a direction of a tension force of the at least one snap element and the main plane of the contact face of the cover element can be different from 90°, in particular the angle can be between 20° and 70°, preferably approximately 45°. Experiments have shown that an angle between 20° and 70°, preferably approximately 45°, the effect of the tension force can improve the gas tightness of the contact area between the filter element and the sealing face as well as the gas tightness of the contact area between the cover element and the housing.

Favorably, an angle between a direction of a tension force of the at least one snap element and the main plane of the sealing face of the housing for the sealing between the filter element and the housing can be approximately 90°. So, a pressure for compressing the sealing and improving the sealing function between the filter element and the housing can be maximized.

According to a further favourable embodiment of the invention, a sealing element can be arranged between the contact face of the housing and the cover element. Advantageously, the sealing element can be flexible. Preferably, the sealing element can be made of an elastomer. With the sealing element, tolerances of the shape of the according contact faces of the cover element and the housing and/or the position of the cover element relative to the housing can be compensated. Further, the sealing function can be increased. Additionally, the sealing element can effect an acoustical decoupling of the cover element and the housing. Advantageously, the sealing element and the cover element can be realized as a two-component part. So, the sealing element can be loss-proof attached to the cover element. Additionally, the opening and closing of the cover element can be further simplified.

Advantageously, the slide-in opening can be arranged on a raw-gas side of the filter element. So, a suction of leak air into the housing through the slide-in opening to the clean-air side of the filter element can be impeded.

According to a further favorable embodiment of the invention, the cover element can be part of a drawer, in which the slide-in filter element can be placed and which can be slid through the slide-in opening into the housing. The filter element can be placed easy and stable in the drawer. The drawer together with the filter element can be slid into the housing and placed precisely in its end position. So, also a filter element, whose internal strength is not sufficient for pushing it on its own, can be placed precisely and stable in the housing. Favorably, the drawer can have a frame for holding the filter element. The drawer can be permeable to gas at least in direction of the air flow through the filter element.

Favorably, at least one snap face, which can act as a counterpart for the at least one snap element, can be arranged at the housing. With this snap face, the tension force of the snap element can be transferred to the housing.

Further, at least one counter support for connecting the housing and the cover element can be arranged on an opposite side of the at least one snap face and the at least one snap element. In this way, the cover element can be clamped between the counter support and the at least one snap element. So the cover element can be pressed against the housing on opposite sides. Thus, the pressure of the cover element against the housing can be distributed all over the contact face. So, the tightness of the sealing further can be improved.

Advantageously, the at least one snap element can have at least one unlocking element for unlocking the fixation of the cover element at the housing. With the at least one unlocking element, the at least one snap element easy can be unlocked, so that the cover element easy can be opened in particular for removing the filter element.

### Brief Description of Drawings

The present invention together with the above-mentioned and other objects and advantages may best be understood from the following detailed description of the embodiments, but not restricted to the embodiments, wherein is shown schematically
- Figure 1: a first perspective view of an air cleaner of an internal combustion engine of a motor vehicle with a housing, in which a drawer with a slide-in filter element is placed;
- Figure 2: a second perspective view of the air cleaner of figure 1;
- Figure 3: a cross-section of the air cleaner of figure 2 along a line of intersection III-III there;
- Figure 4: an enlarged view of the cross-section of the air cleaner of figure 3 of an area of a snap element for fixing a cover element of the drawer at the housing;
- Figure 5: a third perspective view of the air cleaner of figures 1 to 4, wherein the snap elements are shown in an unlocked state;
- Figure 6: a perspective view of the air cleaner of figure 5 with the unlocked snap elements, with the view angle of figure 2;
- Figure 7: a cross-section of the air cleaner of figure 6 along a line of intersection VII-VII there;
- Figure 8: an enlarged view of the cross-section of the air cleaner of figure 7 of the area of the unlocked snap element.

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

### Embodiment(s) of Invention

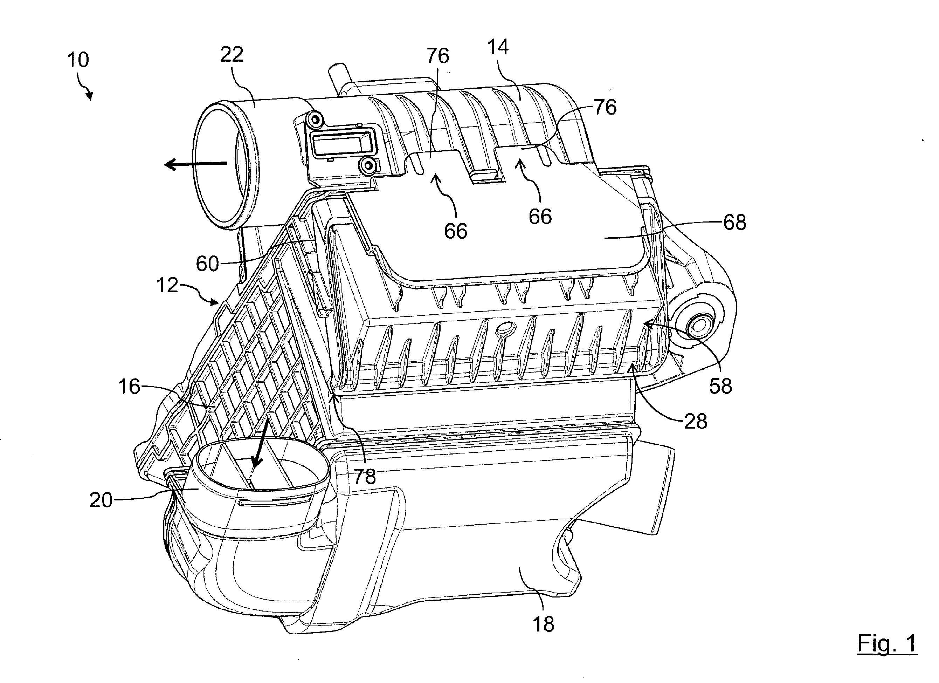

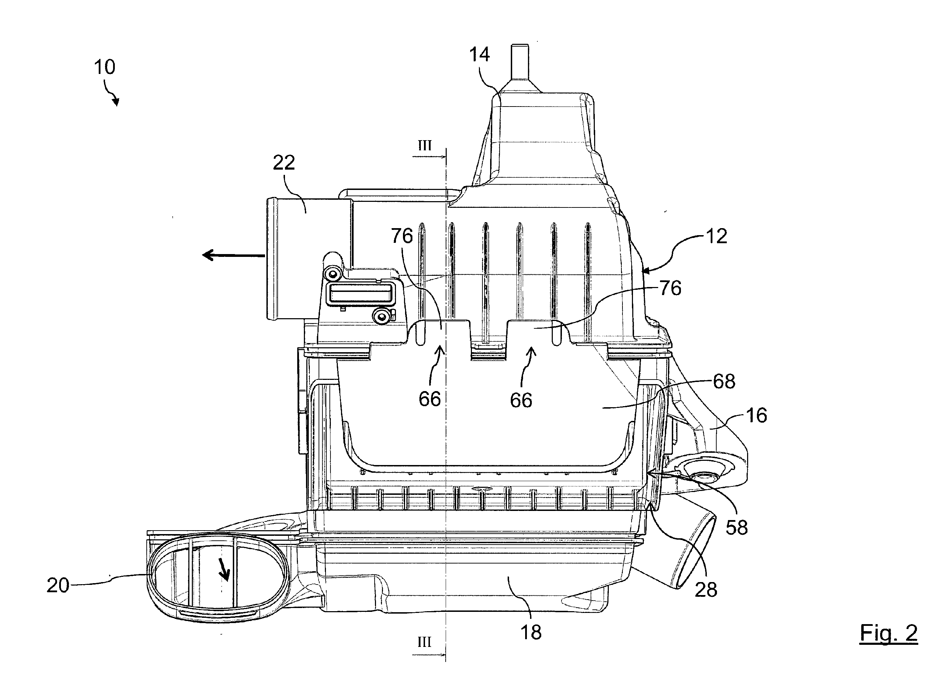

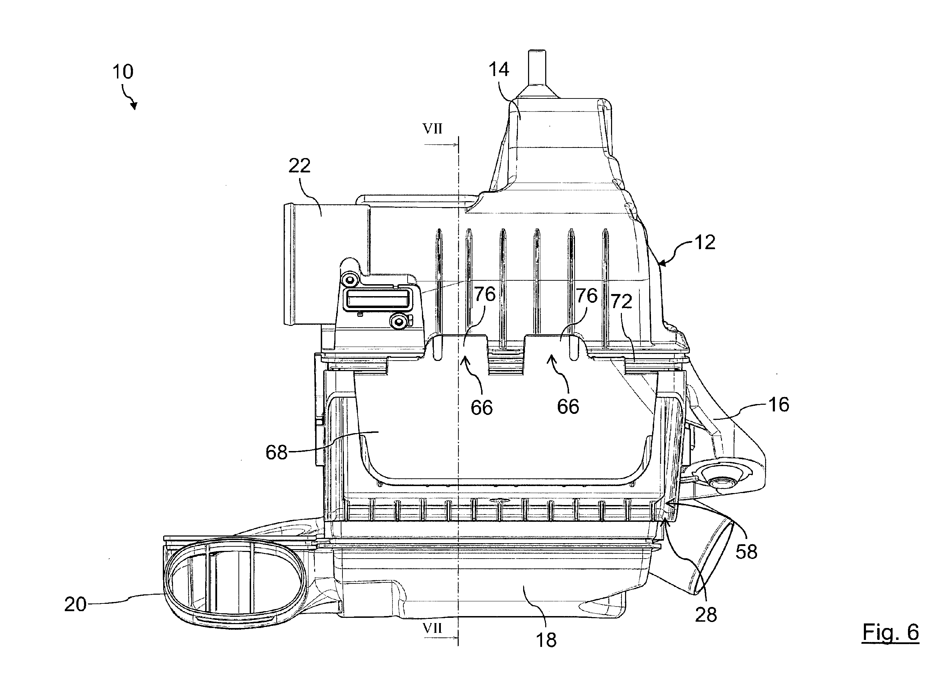

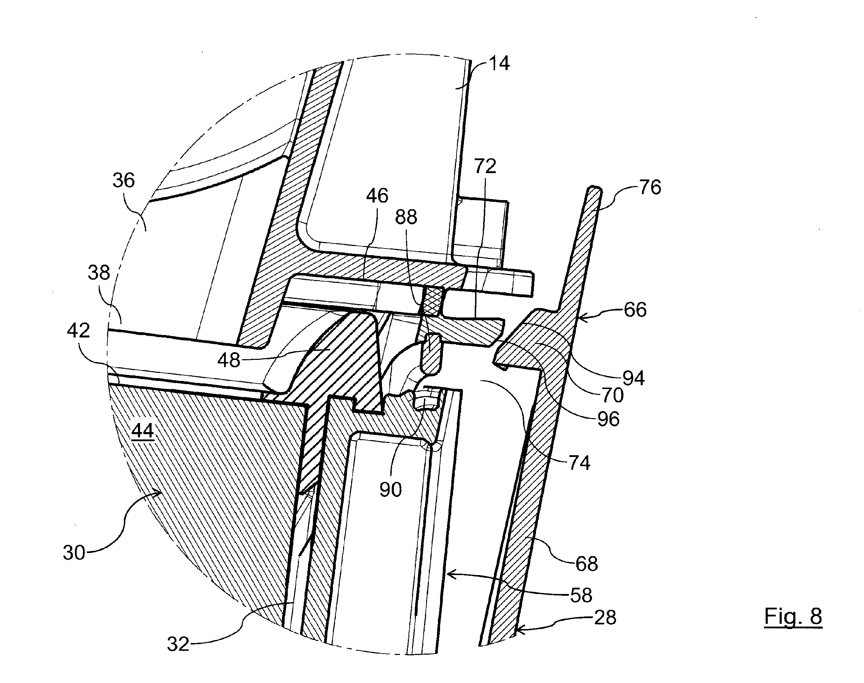

In figures 1 to 8, an air cleaner 10 of an internal combustion engine of a motor vehicle is depicted.

The air cleaner 10 has a housing 12, which comprises of an upper housing part 14, a lower housing part 16 and an inlet housing part 18. The upper housing part 14 is fixed at the lower housing part 16 for example by welding. On the opposite side of the upper housing part 14, the inlet housing part 18 is fixed at the lower housing part 16 for example by welding.

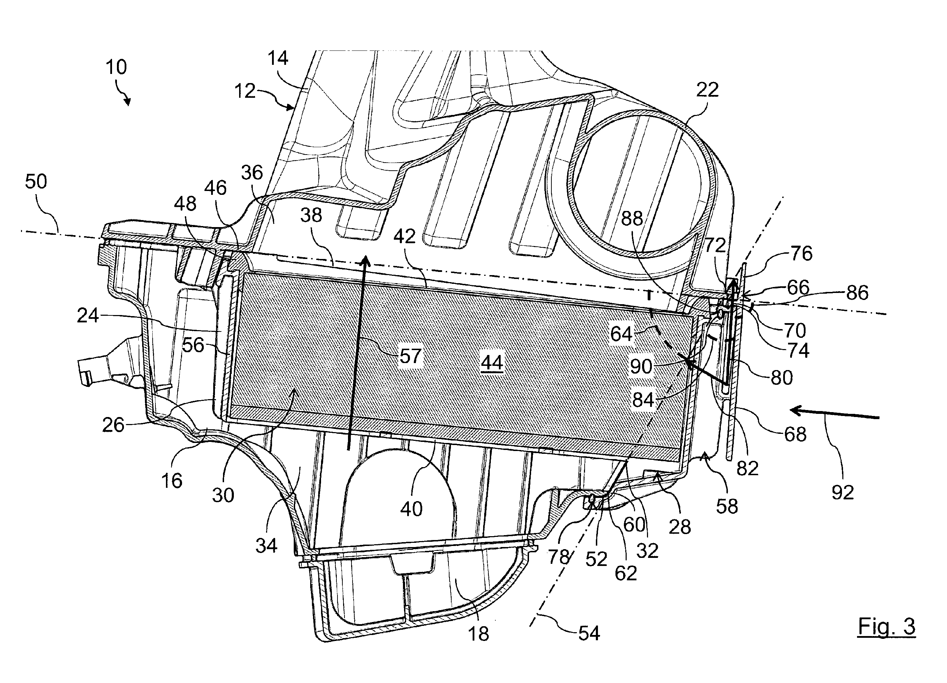

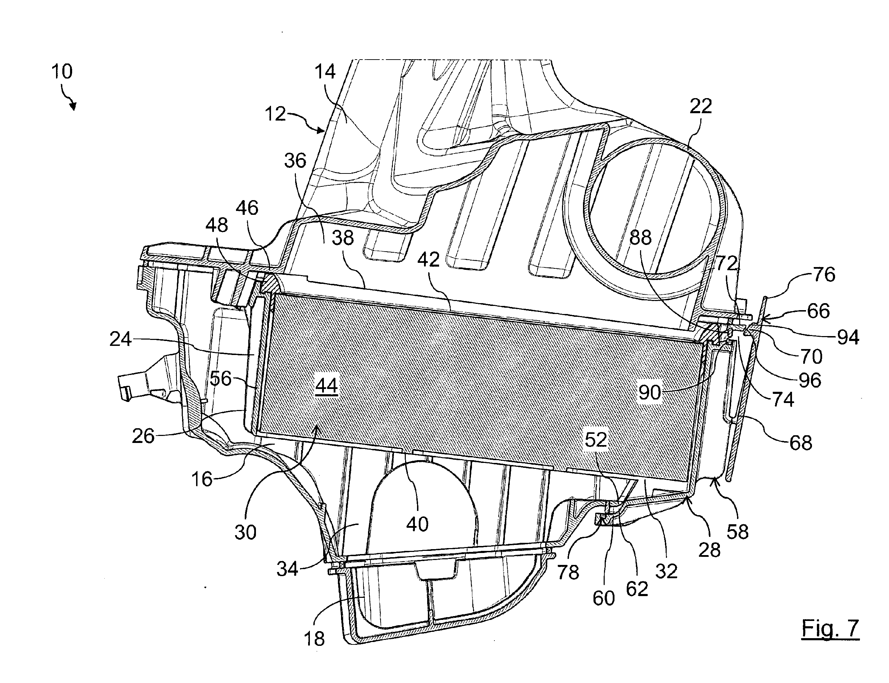

The inlet housing part 18 has an inlet 20 for ambient air, which has to be cleaned. The upper housing part 14 has an outlet 22 for the cleaned air. The lower housing part 16 has an air duct 24, which is shown in figures 3 and 7, with a holding fixture 26 for a drawer 28. In the drawer 28, a slide-in filter element 30 is placed. The lower housing part 16 has a slide-in opening 32 for inserting the drawer 28 with the filter element 30 into the holding fixture 26.

An inlet chamber 34 of the lower housing part 16 is connected by an opening 38 with an outlet chamber 36 of the upper housing part 14. The filter element 30 is covering the opening 38 and so separates the inlet chamber 34 from the outlet chamber 36. The inlet 20 leads into the inlet chamber 34. The outlet 22 comes from the outlet chamber 36. The inlet chamber 34 and the slide-inlet opening 32 are on a raw-gas side 40 of the filter element 30. The outlet chamber 36 and the opening 38 are on a clean-gas side 42 of the filter element 30.

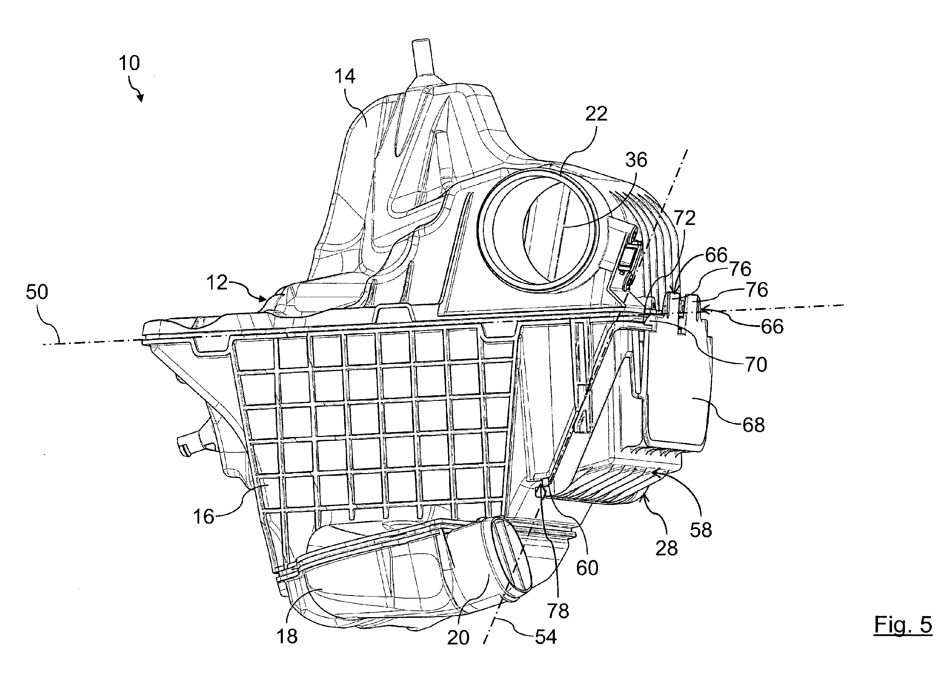

The filter element 30 has a pleated filter medium 44, which has an approximately cuboid shape. A circumferential elastic sealing 48 is fixed tight at an edge of the filter medium 44. The sealing 48 is faced toward a sealing face 46 of the housing part 14. In a locked state of the drawer 28, which is shown in figures 1 to 4, the sealing 48 abuts gas tight against the sealing face 46. The sealing face 46 is surrounding the opening 38. The sealing 48 preferably can be made of polyurethane foam. The sealing face 46 has a main plane, which is in figures 3 and 5 depicted with a broken line 50. The main plane 50 defines a main orientation of the sealing face 46. Preferably, the sealing face 46 is flat.

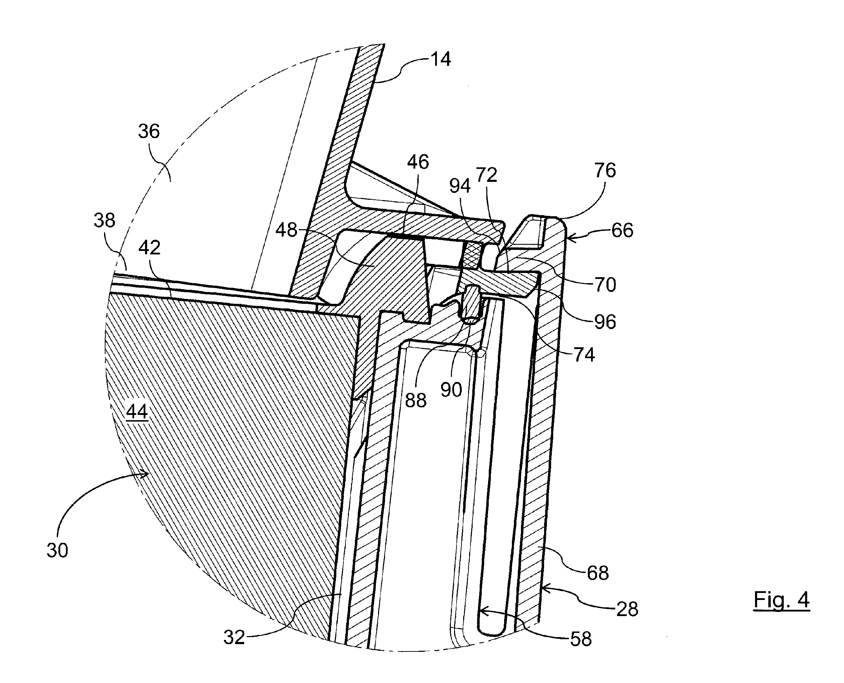

The slide-inlet opening 32 is surrounded by a contact face 52. The contact face 52 has a main plane, which is in figures 3 and 4 depicted with a broken line 54. The main plane 54 defines a main orientation of the contact face 52. Preferably, the contact face 52 is flat.

The drawer 28 is made of plastic. It has a frame 56 for holding the filter element 30. In flow direction of the air, the frame 56 is permeable to gas. The flow direction of the air is indicated in figure 3 with an arrow 57. Further the drawer 28 has a cover element 58, which is arranged in one piece with the frame 56. The cover element 58 has approximately the shape of a hollow cuboid, which is halved along one of its space diagonals. At its open edge, it has an elastomeric sealing element 60, which is realized as a two component part with the cover element 58. The face of the sealing element 60 realizes a contact face 62 of the cover element 58.

In a locked state of the drawer 28, the cover element 58 closes tight the slide-in opening 32 of the lower housing part 16. The contact face 62 of the sealing element 60 abuts tight on the contact face 52, which surrounds the slide-in opening 32. In the locked state, a main plane of the contact face 62 extends more or less along the main plane 54 of the contact face 52. For reason of clarity, in figures 3 and 4 the main plane of the contact face 62 is indicated by the same broken line and has the same reference number as the main plane 54.

An angle 64 between the main plane 48 of the sealing face 46 and the main plane 54 of the contact face 62 of the cover element 58 is different from 90°. For example, the angle 64 is between 20° and 70°, preferably about 45°.

The cover element 58 comprises two snap elements 66 for fixing the cover element 58 at the housing 12. The snap elements 66 are realized in one piece each with a common plate 68. The common plate 68 is realized in one piece with the outer surface of the cover element 58. The common plate 68 with the snap elements 66 is flexible pivoted at the cover element 68. Each snap element 66 has a snap tab 70, which extend in the locked state of the drawer 28 parallel to the main plane 50 of the sealing face 46.

A snap face 72, which acts as a counterpart for the snap elements 66, is connected to the upper housing part 14. The snap face 72 extends parallel to the main plane 50 of the sealing face 46. In the locked state of the drawer 28, the snap face 72 passes through a gap 74 between the snap elements 66 and an upper edge of the cover element 68.

The snap elements 66 each have an unlocking element 76 for unlocking the fixation of the cover element 58 at the housing 12.

A counter support 78 for connecting the lower housing part 16 and the cover element 58 is arranged on an opposite side of the snap face 72 and the snap elements 66. The counter support 78 comprises a support element on the side of the lower housing part 16 and a corresponding support element on the side of the cover element 58.

In the locked state of the drawer 28, a tension force 80 of the snap elements 66 each cause a first force component 82, which is perpendicular to the main plane 54 of the contact face 62 of the cover element 58. The tension forces 80 of the snap elements 66 themselves are perpendicular to the main plane 50 of the sealing face 46 of the housing 12 and so realize a second force component each. The angles between the tension forces 80 and the main plane 50 are indicated with the reference numeral 86.

An angle 84 between the direction of the tension force 80 of the snap elements 66 each and the main plane 54 of the contact face 52 of the cover element 58 are different from 90°. The angles 84 favorably are between 20° and 70°, preferably approximately 45°.

For replacing the filter element 30, the unlocking elements 76 are pulled away from the upper housing part 14. So, the snap tabs 70 are separated from the snap faces 72 each. The snap faces 72 get out of the gaps 74. This situation is shown in figures 5 to 8. The drawer 28 with the filter element 30 is pivoting away from the sealing face 46, so that the sealing 48 can relax. A bar 88 for positioning, which is fixed at the opposite side of the snap face 72, gets out of an according groove 90, which is arranged in the upper edge of the cover element 68. The corresponding support elements of the counter support 78 on the side of the housing part 16 and the cover element 58 are separated. The drawer 28 is pulled out of the holding fixture 26 of the lower housing part 16 against a direction 92 of insertion. The filter element 30 is being replaced.

For closing, the drawer 28 is pushed in the direction 92 of insertion until the snap tabs 70 reach the snap faces 72. Then, the drawer 28 is pivoted towards the sealing face 46. Thereby, a front face 94 of the snap tabs 70, which are sloped like ramps, each are gliding along the according front faces 96 of the snap faces 72. The front faces 96 of the snap faces 72 are sloped accordingly. The snap tabs 70 engage with the snap faces 72, the bar 88 for positioning engages with the groove 90 and the support elements of the counter support 78 are combined. The sealing 48 and the sealing element 60 are compressed, so that the opening 38 and the slide-in opening 32 are sealed tight.

The invention is not limited to an air cleaner 10 of an internal combustion engine of a motor vehicle. The invention can also be applied for other kinds of air cleaners in particularly for vehicles. The invention can further be applied to other kinds of internal combustion engines, in particular for industrial engines.

The angle 86 between the direction of the tension forces 80 of the snap elements 66 each and the main plane 50 also can be different from 90°.

Instead of being pleated with an approximately cuboid shape, the filter medium 44 also can be shaped in a different kind. The filter medium 44 can also be flat without pleats.

The housing 12 can also have more or less than three housing parts 14, 16, 18.

Instead of welding, the housing parts 14, 16, 18 can be fixed together in another way, for example by gluing or by use of mechanical fixing parts, for example screws or springs.

Instead of ambient air, also another gas, for example recirculating air or recirculating exhaust gas can be cleaned by the air cleaner 10.

The sealing 48 can be made of a material different from polyurethane foam.

Instead of being flat, the sealing face 46 also can have a profiling or can be sloped relative to the main plane 50.

Instead of being flat, the contact face 52 also can have a profiling or can be sloped relative to the main plane 54.

More or less than two snap elements 66 can be used.

The cover element 58 can be realized without the sealing element 64.

The slide-in opening 32 also can be arranged on the clean-gas side 42 of the filter element 30.

The drawer 28 also can be made of a material different from plastic.

## Claims

1. Air cleaner (10) in particular of an internal combustion engine in particular of a motor vehicle, comprising a housing (12) with a slide-in opening (32) for inserting a slide-in filter element (30), a cover element (58) for closing the slide-in opening (30), which comprises at least one one-piece snap element (66) for fixing the cover element (58) at the housing (12), **characterized in that** an angle (64) between a main plane (50) of a sealing face (46) of the housing (12) for a sealing (48) between the filter element (30) and the housing (12) and a main plane (54) of a contact face (62) of the cover element (58), to which a corresponding contact face (52) of the housing (12) abuts in a closing state of the cover element (58), is different from 90°.

2. Air cleaner according to claim 1, **characterized in that** a tension force (80) of the at least one snap element (66) can realize a first force component (82), which is perpendicular to the main plane (54) of the contact face (62) of the cover element (58), and a second force component (18), which is perpendicular to the main plane (50) of the sealing face (46) of the housing (12).

3. Air cleaner according to claim 1 or 2, **characterized in that** an angle (84) between a direction of a tension force (80) of the at least one snap element (66) and the main plane (54) of the contact face (62) of the cover element (58) is different from 90°, in particular the angle can be between 20° and 70°, preferably approximately 45°.

4. Air cleaner according to one of the previous claims, **characterized in that** an angle (86) between a direction of a tension force (80) of the at least one snap element (66) and the main plane (50) of the sealing face (46) of the housing (12) for the sealing (48) between the filter element (30) and the housing (12) can be approximately 90°.

5. Air cleaner according to one of the previous claims, **characterized in that** a sealing element (60) is arranged between the contact face (52) of the housing (12) and the cover element (58).

6. Air cleaner according to one of the previous claims, **characterized in that** the slide-in opening (32) is arranged on a raw-gas side (40) of the filter element (30).

7. Air cleaner according to one of the previous claims, **characterized in that** the cover element (58) is part of a drawer (28), in which the slide-in filter element (30) can be placed and which can be slid through the slide-in opening (32) into the housing (12).

8. Air cleaner according to one of the previous claims, **characterized in that** at least one snap face (72), which can act as a counterpart for the at least one snap element (66), is arranged at the housing (12).

9. Air cleaner according to one of the previous claims, **characterized in that** at least one counter support (78) for connecting the housing (12) and the cover element (58) is arranged on an opposite side of the at least one snap face (72) and the at least one snap element (66).

10. Filter element having a pleated filter medium (44) and a circumferential elastic sealing (48), **characterized in that** the filter element (30) is placed in a drawer (28) in an air cleaner (10) according to the previous claims.
